# EUROPEAN PATENT APPLICATION

(11) **EP 4 759 160 A1**
(43) Date of publication of application: **17.06.2026**
(21) Application number: 24850996.0
(22) Date of filing: 06.08.2024
(51) Int. Cl.: A24F 40/46, G01B 11/00

(54) **AEROSOL GENERATING DEVICE, AND METHOD FOR CONTROLLING AEROSOL GENERATING DEVICE**

(30) Priority: 07.08.2023 CN 202310988024
(71) Applicant: Smoore International Holdings Limited, Grand Cayman, KY1-1111 (KY)
(72) Inventor: LIU, Zengri, Shenzhen, Guangdong 518102 (CN); XIONG, Wei, Shenzhen, Guangdong 518102 (CN)
(74) Representative: Winter, Brandl - Partnerschaft mbB
(86) International application number: PCT/CN2024/110064
(87) International publication number: WO 2025/031351

(57) **Abstract**

An aerosol generating device (100) includes a carrier part (10), a heating assembly (20), a driving assembly (30), a camera assembly (40), and a processor (50). The driving assembly (30) drives the carrier part (10) to move. The camera assembly (40) photographs the carrier part (10) to obtain images. The processor (50) obtains the displacement of the carrier part (10) based on the images, and controls, based on the displacement, the carrier part (10) to move to make the heating position (11) correspond to the heating assembly (20).

## Description

### CROSS-REFERENCE TO RELATED APPLICATIONS

This application claims priority and interests to Patent Application No. 202310988024.1, filed with the China National Intellectual Property Administration on August 07, 2023, the disclosure of which is incorporated herein by reference in its entirety.

### TECHNICAL FIELD

This application relates to the field of atomization technologies, and more specifically, to an aerosol generating device and a control method for the aerosol generating device.

### BACKGROUND

A heat-not-burn (HNB) aerosol generating device is a device that uses resistive heating, infrared heating, microwave, electromagnetic heating, or another manner to heat an aerosol generating substrate, thereby generating aerosols for user inhalation. At present, an aerosol generating device is configured to atomize a strip-shaped substrate which is generally formed by a base tape and an atomizable substrate arrayed on the base tape. Each array can provide one or more puffs. During use of the aerosol generating device, the aerosol generating device drives the strip-shaped substrate to move such that the substrate of an array moves within a heating position range of a heating element, thereby heating the atomizable substrate and generating aerosols. During the use, the aerosol generating device needs to drive the aerosol generating substrate to be aligned with a heating assembly before heating. However, the current aerosol generating device cannot accurately control a movement position of the aerosol generating substrate. As a result, heating atomization of atomizable substrate units in an atomizable substrate array is inconsistent. Some atomizable substrate units may be overheated, while others may not be fully heated. Therefore, how to accurately control the movement of the strip-shaped substrate such that substrates of corresponding arrays are within the heating position range of the heating element is a problem that needs to be solved.

### SUMMARY

Implementations of this application provide an aerosol generating device and a control method for the aerosol generating device.

The aerosol generating device of this implementation of this application includes a carrier part, a heating assembly, a driving assembly, a camera assembly, and a processor. A heating position is provided on the carrier part. The heating assembly is configured to heat the heating position. The driving assembly is connected to the carrier part. The driving assembly is configured to drive the carrier part to move in a first direction. The camera assembly is configured to photograph the carrier part to obtain a plurality of frames of images when the driving assembly drives the carrier part to move. The processor is configured to: obtain the displacement of the carrier part based on the plurality of frames of the images, and control, based on the displacement, the carrier part to move to make the heating position correspond to the heating assembly.

The control method for an aerosol generating device of this implementation of this application includes: driving, by a driving assembly, a carrier part to move; photographing, by a camera assembly, the carrier part to obtain a plurality of frames of images; obtaining the displacement of the carrier part based on the plurality of frames of the images; and controlling, based on the displacement, the carrier part to move to make a heating position of the carrier part correspond to a heating assembly.

In the aerosol generating device and the control method for the aerosol generating device of this application, the driving assembly can drive the carrier part to move, and the camera assembly can photograph the carrier part, record the plurality of frames of images of the carrier part during moving, and obtain the displacement of the carrier part based on the plurality of frames of images. After the displacement is obtained, the driving assembly can accurately control the movement distance of the carrier part, so that an aerosol generating substrate on the heating position is precisely aligned with the heating assembly, and the heating assembly heats the aerosol generating substrate uniformly and sufficiently.

The additional aspects and advantages of the implementations of this application will be partially provided in the following descriptions, some of which will become apparent from the following descriptions, or learned through the practice of the implementations of this application.

### BRIEF DESCRIPTION OF THE DRAWINGS

The above and/or additional aspects and advantages of this application will become apparent and readily understood from the following descriptions of the implementations in conjunction with the accompanying drawings. Where:
FIG. 1 is a schematic structural diagram of an aerosol generating device according to some implementations of this application;
FIG. 2 is a partially schematic structural diagram of an aerosol generating device according to some implementations of this application;
FIG. 3 is a partially schematic structural diagram of an aerosol generating device in another view according to some implementations of this application;
FIG. 4 is a schematic structural diagram of a camera assembly of an aerosol generating device according to some implementations of this application;
FIG. 5 shows a schematic diagram of a process of forming an overlapping region and a displacement region according to some implementations of this application;
FIG. 6 is a flowchart of a control method for an aerosol generating device according to some implementations of this application;
FIG. 7 is a flowchart of a control method for an aerosol generating device according to some implementations of this application; and
FIG. 8 is a flowchart of a control method for an aerosol generating device according to some implementations of this application.

### DETAILED DESCRIPTION

The implementations of this application are described in detail below, and examples of the implementations are shown in accompanying drawings, where the same or similar elements or the elements having same or similar functions are denoted by the same or similar reference numerals throughout the description. The implementations described below with reference to the accompanying drawings are exemplary and used only for explaining the implementations of this application, and should not be construed as a limitation on the implementations of this application.

In the description of this application, it should be understood that orientation or position relationships indicated by the terms such as "thickness", "upper", "top", "bottom", "inside", and "outside" are based on orientation or position relationships shown in the accompanying drawings, and are used only for ease and brevity of illustration and description, rather than indicating or implying that the mentioned device or element needs to have a particular orientation or needs to be constructed and operated in a particular orientation. Therefore, such terms should not be construed as limiting of this application. In addition, the terms such as "first" and "second" are used only for the purpose of description, and should not be understood as indicating or implying the relative importance or implicitly specifying the quantity of the indicated technical features. Thus, features defined as "first" and "second" explicitly or implicitly include one or more of the features. In the descriptions of this application, "a plurality of" means two or more, unless otherwise definitely and specifically limited.

In the description of this application, it should be noted that unless otherwise explicitly stipulated and restricted, terms "mounting", "connection", and "connect" should be understood broadly, which, in one example, may be a fixed connection, or a detachable connection, or an integral connection; or may be a mechanical connection, or an electrical connection, or mutual communication; or may be a direct connection, or an indirect connection by using an intermediate medium, or internal communication between two elements, or an interactive relationship between two elements.

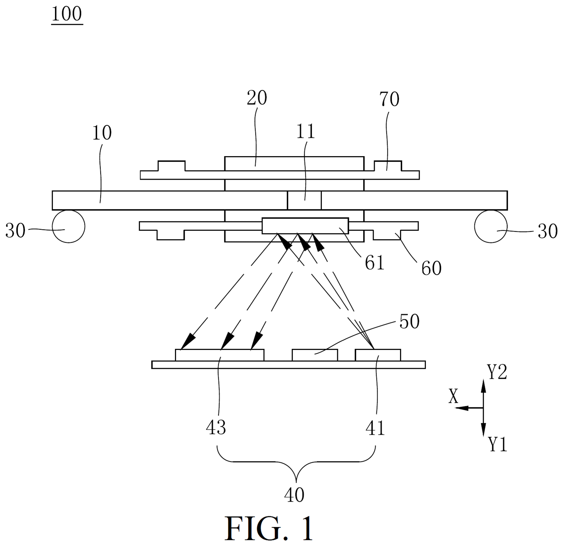

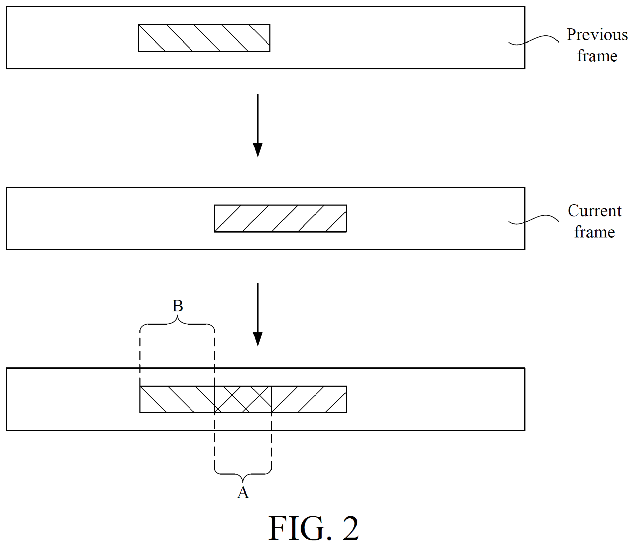

Referring to FIG. 1 and FIG. 2, an aerosol generating device 100 of this application includes a carrier part 10, a heating assembly 20, a driving assembly 30, a camera assembly 40, and a processor 50. A heating position 11 is provided on the carrier part 10. The heating assembly 20 is configured to heat the heating position 11.

The driving assembly 30 is connected to the carrier part 10. The driving assembly 30 is configured to drive the carrier part 10 to move in a first direction X. The camera assembly 40 is configured to photograph the carrier part 10 to obtain a plurality of frames of images when the driving assembly 30 drives the carrier part 10 to move. The processor 50 obtains the displacement of the carrier part 10 based on the plurality of frames of images, and controls, based on the displacement, the carrier part 10 to move to make the heating position 11 correspond to the heating assembly 20.

In the aerosol generating device 100 of this application, the driving assembly 30 can drive the carrier part 10 to move, and the camera assembly 40 can photograph the carrier part 10, record the plurality of frames of images of the carrier part 10 during moving, and obtain the displacement of the carrier part based on the images. After the displacement distance is obtained, the driving assembly 30 can accurately control the movement distance of the carrier part 10, so that an aerosol generating substrate on the heating position 11 is precisely aligned with the heating assembly 20, and the heating assembly 20 heats the aerosol generating substrate uniformly and sufficiently.

The aerosol generating device 100 will be further explained below in conjunction with the accompanying drawings.

Referring to FIG. 1 and FIG. 2, in some implementations, the carrier part 10 can carry an aerosol generating substrate. In some implementations, the aerosol generating substrate may be an aerosol generating substrate carrier carrying a mixed solution. Solutes in the mixed solution can include nicotine, nicotine salt, plant extracts, and the like. Solvents in the mixed solution can be common organic and/or inorganic solutes such as propylene glycol, plant glycerol, and pure water. In some other implementations, the aerosol generating substrate is a solid aerosol generating substrate, such as a leaf aerosol generating substrate, a strip-shaped aerosol generating substrate, or a sheet-like aerosol generating substrate.

Further, the heating position 11 on the carrier part 10 is one or more fixed points disposed on the surface of the carrier part 10. In a case that the aerosol generating substrate is carried on the carrier part 10, a portion of the aerosol generating substrate that can generate aerosols can correspond to the heating position 11. The heating assembly 20 can be disposed corresponding to each heating position 11. For example, the carrier part 10 is a movable strip. A plurality of heating positions 11 that can perform heating to generate aerosols are distributed on the surface of the strip. The aerosol generating substrate is arranged on the heating positions 11. During moving of the strip, the heating positions 11 on the surface of the strip can correspond to the heating assembly 20 in sequence. In this case, the heating assembly 20 can heat the aerosol generating substrate on the heating positions 11 to generate aerosols.

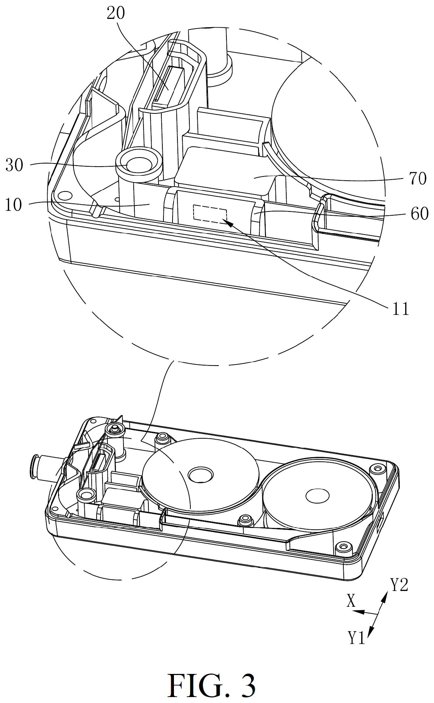

Referring to FIG. 1 and FIG. 3, in some implementations, the heating assembly 20 is a structure capable of generating heat energy or transferring heat energy to other portions. In some implementations, the heating assembly 20 can directly convert energy in another form, such as electric energy, chemical energy, and solar energy, into heat energy, and conduct the heat energy to other portions to be heated through heat conduction. For example, the heating assembly 20 is a heating resistor. After being electrified, the heating resistor can convert electrical energy into heat energy. In yet some other implementations, the heating assembly 20 emits energy in another form, such as an electromagnetic wave, laser, or heat radiation that can directly act on the surface of a portion to be heated, so as to increase a temperature of a region that receives the electromagnetic wave, the laser, or the heat radiation. For example, the heating assembly 20 can emit laser to the aerosol generating substrate, and the laser irradiates the heating positions 11 on the aerosol generating substrate to increase the temperature at the heating positions 11, thereby generating aerosols.

Referring to FIG. 1 and FIG. 3, in some implementations, the driving assembly 30 is a structure capable of driving the carrier part 10 to move in the first direction X. In a case that the carrier part 10 is a strip, the first direction X is a length direction of the strip. In this case, the aerosol generating substrate can move in the first direction X along with the carrier part 10 and correspond to the heating assembly 20.

Specifically, the driving assembly 30 includes a driving motor and a conveying member. The driving motor can drive the conveying member to rotate, and the conveying member can be in contact with the surface of the carrier part 10. When the conveying member rotates in a positive direction, the conveying member can drive the carrier part 10 to move in the positive direction of the first direction X. When the conveying member rotates in a negative direction, the conveying member can drive the carrier part 10 to move in the negative direction of the first direction X.

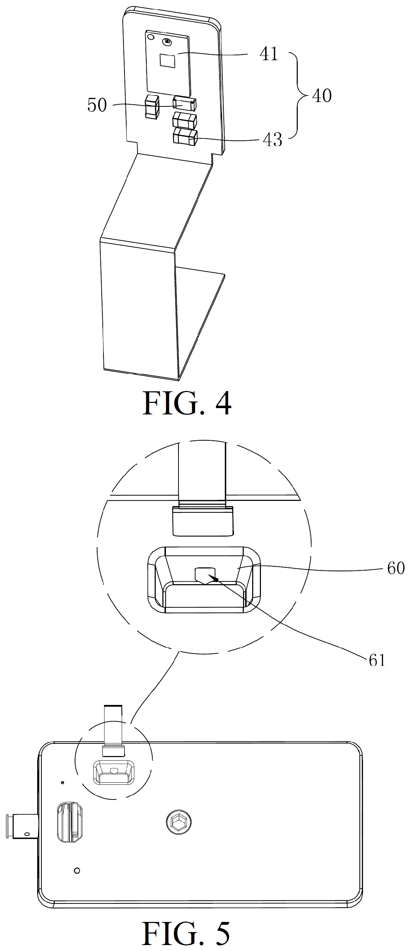

Referring to FIG. 1 and FIG. 4, in some implementations, the camera assembly 40 is an optical structure that photographs the carrier part 10 to obtain a plurality of frames of images. The images captured by the camera assembly 40 can be transmitted to the processor 50, and are analyzed by the processor 50 to obtain a movement distance (i.e. the displacement of the heating position 11) of the same heating position 11 of the carrier part 10 within a photographing interval between two continuous frames of images.

Specifically, in some implementations, the camera assembly 40 includes a light source 41 and an image sensor 43 electrically connected to the processor 50. The light source 41 and the image sensor 43 are both spaced apart from the carrier part 10 to form a light path for light to pass through. The light source 41 can emit light towards the carrier part 10. Types of the light source 41 include but are not limited to visible light, infrared ray, ultraviolet light, or the like. The light source 41 may be a surface light source that emits parallel light, may be a point light source that emits light from a fixed point, or a line light source that emits light on the same straight line. After the light is reflected by the side of the carrier part 10 facing the camera assembly 40, the image sensor 43 can receive the reflected light (including light that passes through the light-transmitting portion 61 and is reflected back by the surface of the carrier part 10 and light that is from another position and is reflected back by the surface of the carrier part 10, and the another position includes but is not limited to the sun and other light sources) and form images based on different angles and different light intensities of a plurality of reflected lights. In the process that the carrier part 10 moves in the first direction X, the image sensor 43 can capture and record a plurality of frames of images spaced by preset time, and transmit relevant information of the plurality of frames of images to the processor 50 for processing. Relevant information of the images transmitted by the image sensor 43 includes but is not limited to the shape of a photographed object (the photographed object of this application includes the "carrier part 10"), the size of the area of the photographed object, the number of photons within the range of the photographed object, the photographing order of each frame of image, and the like.

More specifically, in some implementations, the image sensor 43 is internally provided with an optical array capable of receiving light and a reading component for reading image information of the optical array. In a case that the carrier part 10 continues to move in the first direction X, the position, used for reflecting light, on the surface of the carrier part 10 also changes all the time. Since the aerosol generating substrate is arranged at the heating position 11 of the carrier part 10, a difference exists between the reflectivity of the heating position 11 of the carrier part 10 and another portion of the carrier part 10. The reading component can determine information of the images formed by the heating position 11 on the optical array based on a difference in light reflection angles at different positions and a difference in reflected light intensities at different positions. In some implementations, the light reflected onto the optical array can be diffracted on the surface of the optical array and can implement optical imaging. The reading component can record the imaging information and record it as a current frame of image. In some other implementations, the light reflected onto the optical array forms laser speckles on the surface of the optical array, and the reading component can record the laser speckles and record it as a current frame of image.

Referring to FIG. 1 and FIG. 2, in some implementations, the processor 50 can receive the images transmitted by the image sensor 43 and compare two frames of images spaced by the preset time to obtain the displacement of the heating position 11 within the preset time.

Specifically, in some implementations, a previous frame of image and a current frame of image that are adjacent to each other can be read within the processor 50. A time interval between the previous frame of image and the current frame of image is unit time. By comparing the current frame of image with the previous frame of image, the processor 50 can obtain an overlapping region (A) between two adjacent frames of images and a newly added displacement region (B) of the current frame of image with respect to the previous frame of image. Moreover, after the overlapping region (A) and the displacement region (B) are determined, the processor 50 can read image information of the overlapping region (A) and the displacement region (B), and obtain a displacement based on the number of photons CoB of the displacement region (B), the number of photons C per unit area of a reflection region of the surface corresponding to reflected light received by the image sensor 43, and a preset scaling factor K.

The number of photons refers to the total number of photons passing through a unit area within unit time. The number of photons CoB of the displacement region (B) refers to the total number of photons passing through the area of the displacement region (B) within unit time.

Further, in some implementations, the scaling factor K is a proportional relationship between the area of the displacement region (B) and the displacement Di of the carrier part 10 corresponding to the two adjacent frames of images. The scaling factor K is a fixed value which can be obtained through the geometric relationship of any region, capable of reflecting light, on the surface of the carrier part 10, or can be obtained through experimental testing.

Still further, in some implementations, the number of photons C per unit area of the reflection region of the surface corresponding to the reflected light received by the image sensor 43 is a fixed value. The value of the number of photons C can be related to at least one of the following parameters: a reflection distance D0 between the camera assembly 40 and the carrier part 10, the luminous intensity L0 of the light source 41 of the camera assembly 40, the reflectivity R of the surface of the carrier part 10, or the like. For example, in a case that the reflection distance D0 between the camera assembly 40 and the carrier part 10 increases, the loss of the light during propagation increases. In this case, the value of the number of photons C per unit area of the reflection region of the surface corresponding to the reflected light decreases. In a case that the reflection distance D0 between the camera assembly 40 and the carrier part 10 decreases, the loss of the light during propagation increases. In this case, the value of the number of photons C per unit area of the reflection region of the surface corresponding to the reflected light increases.

In a case that the luminous intensity L0 of the light source 41 of the camera assembly 40 increases, the value of the number of photons C per unit area of the reflection region of the surface corresponding to the reflected light increases. In a case that the luminous intensity L0 of the light source 41 of the camera assembly 40 decreases, the value of the number of photons C per unit area of the reflection region of the surface corresponding to the reflected light decreases.

In a case that the reflectivity R of the surface of the carrier part 10 is relatively high, the reflection effect of the carrier part 10 on the light is better, and most of the light is reflected by the surface of the carrier part 10. In this case, the value of the photon number C per unit area of the reflection region of the surface corresponding to the reflected light is relatively large. In a case that the reflectivity R of the surface of the carrier part 10 is relatively low, the reflection effect of the carrier part 10 on the light is relatively poor, and most of the light is absorbed by the surface of the carrier part 10. As a result, the value of the photon number C per unit area of the reflection region of the surface corresponding to the reflected light is relatively small.

Referring to FIG. 1 and FIG. 5, in some implementations, the aerosol generating device 100 may further include a first limiting member 60. The first limiting member 60 is disposed between the carrier part 10 and the camera assembly 40. The first limiting member 60 can restrict the movement of the carrier part 10 in the second direction Y, to prevent the carrier part 10 from falling off from the driving assembly 30. The second direction Y is different from the first direction X. For example, the first limiting member 60 can restrict the movement of the carrier part 10 in the positive direction Y1 of the second direction Y. In some implementations, the positive direction Y1 of the second direction Y is a direction in which the carrier part 10 points towards the camera assembly 40.

Further, in some implementations, the first limiting member 60 is provided with a light-transmitting portion 61. The light-transmitting portion 61 is configured to allow light to pass through. For example, the light-transmitting portion 61 can allow the light emitted by the light source 41 to pass through. The light-transmitting portion 61 can allow the light, which passes through the light-transmitting portion 61 and is then reflected back by the surface of the carrier part 10, to pass through. The light-transmitting portion 61 can allow the light from another portion to pass through. The light-transmitting portion 61 can also allow the light, which is from the another portion and is then reflected back by the surface of the carrier part 10, to pass through. The image sensor 43 can receive the light which is reflected by the carrier part 10 and then passes through the light-transmitting portion 61 (including the light which is emitted by the light source 41, then passes through the light-transmitting portion 61, and is reflected back by the surface of the carrier part 10, and the light which is from the another portion and is directly reflected back by the surface of the carrier part 10) to obtain the plurality of frames of images. In this way, the plurality of frames of images all contain the carrier part 10. In some implementations, the light-transmitting portion 61 is a light-transmitting solid structure. That is, the light-transmitting portion 61 is made of a material that can transmit light. In some other implementations, the light-transmitting portion 61 is a hollow structure formed in the first limiting member 60. The light can pass through the first limiting member 60 via the hollow structure and be reflected by the surface of the carrier part 10. The light reflected back by the surface of the carrier part 10 can also pass through the hollow structure to be received by the image sensor 43.

Still further, the number of photons C per unit area of the reflection region of the surface corresponding to the reflected light received by the image sensor 43 can also be related to the light transmittance T of the light-transmitting portion 61. For example, in a case that the light transmittance T of the light-transmitting portion 61 is relatively high, when the light passes through the light-transmitting portion 61, a small amount of light is absorbed and reflected by the light-transmitting portion 61, so that a relatively large number of photons C can pass through the light-transmitting portion 61 and be reflected by the surface of the carrier part 10. In a case that the light transmittance T of the light-transmitting portion 61 is relatively low, when the light passes through the light-transmitting portion 61, a large amount of light is absorbed and reflected by the light-transmitting portion 61, so that a relatively small number of photons C can pass through the light-transmitting portion 61 and be reflected by the surface of the carrier part 10.

Further, referring to FIG. 1 and FIG. 2, in some implementations, the aerosol generating device 100 may further include a second limiting member 70. The first limiting member 60 and the second limiting member 70 are respectively arranged on two sides, facing away from each other, of the carrier part 10 in the second direction Y. The first limiting member 60 is closer to the camera assembly 40 than the second limiting member 70. The second limiting member 70 can restrict the movement of the carrier part 10 in the negative direction Y2 of the second direction Y, to prevent the impact on the alignment between the heating position 11 and the heating assembly 20 due to wrinkles generated during the moving of the carrier part 10.

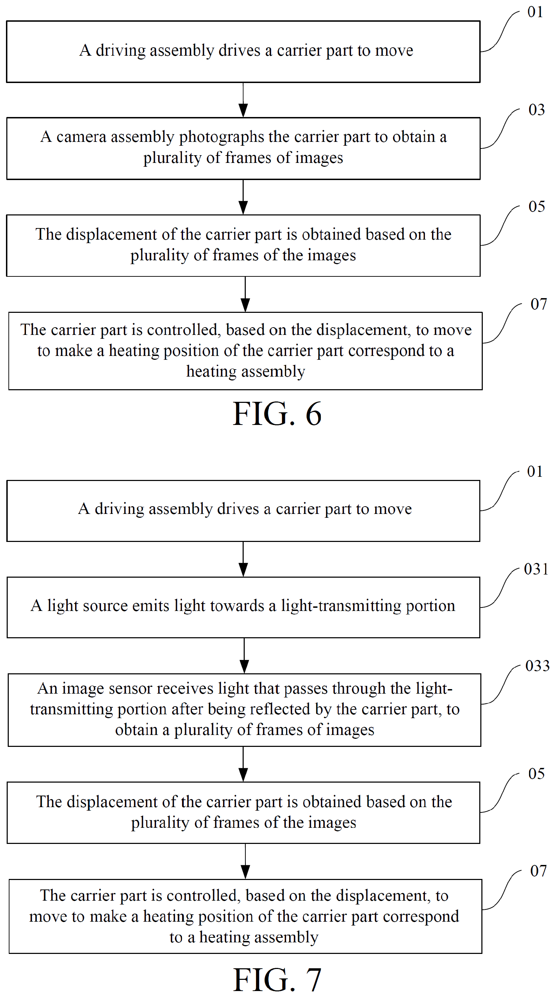

Referring to FIG. 1 and FIG. 6, a control method for an aerosol generating device in this implementation of this application includes:
01: A driving assembly 30 drives a carrier part 10 to move.
03: A camera assembly 40 photographs the carrier part 10 to obtain a plurality of frames of images.
05: The displacement of the carrier part 10 is obtained based on the plurality of frames of the images.
07: The carrier part 10 is controlled, based on the displacement, to move to make a heating position 11 of the carrier part 10 correspond to a heating assembly 20.

The driving assembly 30 can drive the carrier part 10 to move, and the camera assembly 40 can photograph the carrier part 10, record the plurality of frames of images of the carrier part 10 during moving, and obtain the displacement of the carrier part based on the images. After the displacement distance is obtained, the driving assembly 30 can accurately control the movement distance of the carrier part 10, so that an aerosol generating substrate on the heating position 11 is precisely aligned with the heating assembly 20, and the heating assembly 20 heats the aerosol generating substrate more sufficiently.

Referring to FIG. 1 and FIG. 7, in some implementations, in 03, the photographing, by a camera assembly 40, the carrier part 10 to obtain a plurality of frames of images includes:
031: A light source 41 emits light towards a light-transmitting portion 61.
033: An image sensor 43 receives light that passes through the light-transmitting portion 61 after being reflected by the carrier part 10, to obtain the plurality of frames of images.

The light source 41 can emit light towards the carrier part 10. Types of the light source 41 include but are not limited to visible light, infrared ray, ultraviolet light, or the like. The light source 41 may be a surface light source that emits parallel light, may be a point light source that emits light from a fixed point, or a line light source that emits light on the same straight line. After the light is reflected by the side of the carrier part 10 facing the camera assembly 40,

the image sensor 43 can receive the reflected light and form images based on different angles and different light intensities of a plurality of reflected lights. In the process that the carrier part 10 moves in the first direction X, the image sensor 43 can capture and record a plurality of frames of images spaced by preset time, and transmit relevant information of the plurality of frames of images to the processor 50 for processing. Relevant information of the images transmitted by the image sensor 43 includes but is not limited to the shape of a photographed object, the size of the area of the photographed object, the number of photons within the range of the photographed object, the photographing order of each frame of image, and the like.

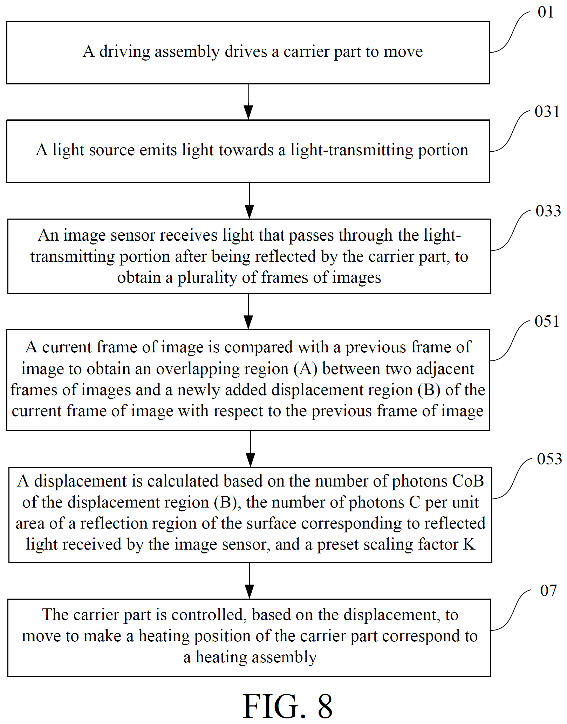

Referring to FIG. 1 and FIG. 8, in some implementations, in 05, the obtaining the displacement of the carrier part 10 based on the plurality of frames of the images includes:
051: A current frame of image is compared with a previous frame of image to obtain an overlapping region (A) between two adjacent frames of images and a newly added displacement region (B) of the current frame of image with respect to the previous frame of image.
053: The displacement is obtained based on the number of photons CoB of the displacement region (B), the number of photons C per unit area of a reflection region of the surface corresponding to reflected light received by the image sensor 43, and a preset scaling factor K.

The number of photons refers to the total number of photons passing through a unit area within unit time. The number of photons CoB of the displacement region (B) refers to the total number of photons passing through the area of the displacement region (B) within unit time.

Further, in some implementations, the scaling factor K is a proportional relationship between the area of the displacement region (B) and the displacement Di of the carrier part 10 corresponding to the two adjacent frames of images. The scaling factor K is a fixed value which can be obtained through the geometric relationship of any region, capable of reflecting light, on the surface of the carrier part 10, or can be obtained through experimental testing.

Still further, in some implementations, the number of photons C per unit area of the reflection region of the surface corresponding to the reflected light received by the image sensor 43 is a fixed value. The value of the number of photons C can be related to at least one of the following parameters: a reflection distance D0 between the camera assembly 40 and the carrier part 10, the luminous intensity L0 of the light source 41 of the camera assembly 40, the reflectivity R of the surface of the carrier part 10, the light transmittance T of the light-transmitting portion 61, or the like.

For example, in a case that the reflection distance D0 between the camera assembly 40 and the carrier part 10 increases, the loss of the light during propagation increases. In this case, the value of the number of photons C per unit area of the reflection region of the surface corresponding to the reflected light decreases. In a case that the reflection distance D0 between the camera assembly 40 and the carrier part 10 decreases, the loss of the light during propagation increases. In this case, the value of the number of photons C per unit area of the reflection region of the surface corresponding to the reflected light increases.

In a case that the luminous intensity L0 of the light source 41 of the camera assembly 40 increases, the value of the number of photons C per unit area of the reflection region of the surface corresponding to the reflected light increases. In a case that the luminous intensity L0 of the light source 41 of the camera assembly 40 decreases, the value of the number of photons C per unit area of the reflection region of the surface corresponding to the reflected light decreases.

In a case that the reflectivity R of the surface of the carrier part 10 is relatively high, the reflection effect of the carrier part 10 on the light is better, and most of the light is reflected by the surface of the carrier part 10. In this case, the value of the photon number C per unit area of the reflection region of the surface corresponding to the reflected light is relatively large. In a case that the reflectivity R of the surface of the carrier part 10 is relatively low, the reflection effect of the carrier part 10 on the light is relatively poor, and most of the light is absorbed by the surface of the carrier part 10. As a result, the value of the photon number C per unit area of the reflection region of the surface corresponding to the reflected light is relatively small.

In a case that the light transmittance T of the light-transmitting portion 61 is relatively high, when the light passes through the light-transmitting portion 61, a small amount of light is absorbed and reflected by the light-transmitting portion 61, so that a relatively large number of photons C can pass through the light-transmitting portion 61 and be reflected by the surface of the carrier part 10. In a case that the light transmittance T of the light-transmitting portion 61 is relatively low, when the light passes through the light-transmitting portion 61, a large amount of light is absorbed and reflected by the light-transmitting portion 61, so that a relatively small number of photons C can pass through the light-transmitting portion 61 and be reflected by the surface of the carrier part 10.

In summary, in the control method for the aerosol generating device of this application, the driving assembly 30 can drive the carrier part 10 to move, and the camera assembly 40 can photograph the carrier part 10, record the plurality of frames of images of the carrier part 10 during moving, and obtain the displacement of the carrier part based on the images. After the displacement distance is obtained, the driving assembly 30 can accurately control the movement distance of the carrier part 10, so that an aerosol generating substrate on the heating position 11 is precisely aligned with the heating assembly 20, and the heating assembly 20 heats the aerosol generating substrate uniformly and sufficiently.

In the description of this specification, description of reference terms such as "some implementations", "a example", or "for example" means including specific features, structures, materials, or characteristics described in the implementation or example in at least one implementation or example of this application. In this specification, the schematic representations of the above terms are not necessarily intended to refer to the same implementation or example. Furthermore, the specific features, structures, materials or characteristics described may be combined in any suitable manner in any one or more implementations or examples. In addition, a person skilled in the art may integrate or combine different embodiments or examples described in the specification and features of the different embodiments or examples as long as they are not contradictory to each other.

The implementations of this application have been shown and described above, but it can be understood that the above implementations are exemplary and cannot be understood as limitations on this application. A person of ordinary skill in the art may make changes, modifications, substitutions, and transformations to the above implementations within the scope of this application.

## Claims

1. An aerosol generating device, comprising:
a carrier part, wherein a heating position is provided on the carrier part;
a heating assembly configured to heat the heating position;
a driving assembly connected to the carrier part, wherein the driving assembly is configured to drive the carrier part to move in a first direction;
a camera assembly configured to photograph the carrier part to obtain a plurality of frames of images when the driving assembly drives the carrier part to move; and
a processor configured to: obtain the displacement of the carrier part based on the plurality of frames of the images, and control, based on the displacement, the carrier part to move to make the heating position correspond to the heating assembly.

2. The aerosol generating device of claim 1, wherein the aerosol generating device further comprises:
a first limiting member, wherein the first limiting member is disposed between the carrier part and the camera assembly and is configured to restrict the movement of the carrier part in a second direction, and the second direction is different from the first direction.

3. The aerosol generating device of claim 2, wherein the first limiting member is provided with a light-transmitting portion configured to cause the camera assembly to obtain the images.

4. The aerosol generating device of claim 3, wherein
the light-transmitting portion is a light-transmitting solid structure; or
the light-transmitting portion is a hollow structure.

5. The aerosol generating device of claim 3, wherein the camera assembly comprises:
a light source configured to emit light towards the light-transmitting portion; and
an image sensor electrically connected to the processor, wherein the image sensor is configured to receive light that passes through the light-transmitting portion after being reflected by the carrier part, to obtain the plurality of frames of images.

6. The aerosol generating device of claim 2, wherein the aerosol generating device further comprises a second limiting member; the first limiting member and the second limiting member are respectively arranged on two sides, facing away from each other, of the carrier part in the second direction; the first limiting member is closer to the camera assembly than the second limiting member; and the second limiting member is configured to restrict the movement of the carrier part in the negative direction of the second direction.

7. The aerosol generating device of claim 1, wherein the processor is further configured to:
compare a current frame of image with a previous frame of image to obtain an overlapping region (A) between two adjacent frames of images and a newly added displacement region (B) of the current frame of image with respect to the previous frame of image; and
obtain the displacement based on the number of photons CoB of the displacement region (B), the number of photons C per unit area of a reflection region of the surface corresponding to reflected light received by the image sensor in the camera assembly, and a preset scaling factor K, wherein the scaling factor K is a proportional relationship between the area of the displacement region (B) and the displacement Di of the carrier part corresponding to the two adjacent frames of images.

8. A control method for an aerosol generating device, comprising:
driving, by a driving assembly, a carrier part to move;
photographing, by a camera assembly, the carrier part to obtain a plurality of frames of images;
obtaining the displacement of the carrier part based on the plurality of frames of the images; and
controlling, based on the displacement, the carrier part to move to make a heating position of the carrier part correspond to a heating assembly.

9. The control method of claim 8, wherein the aerosol generating device further comprises a first limiting member; the first limiting member is provided with a light-transmitting portion; the camera assembly comprises a light source and an image sensor; and the photographing, by a camera assembly, the carrier part to obtain a plurality of frames of images comprises:
emitting, by the light source, light towards the light-transmitting portion; and
receiving, by the image sensor, light that passes through the light-transmitting portion, is then reflected, and passes through the light-transmitting portion again, to obtain the plurality of frames of images.

10. The control method of claim 9, wherein the obtaining the displacement of the carrier part based on the plurality of frames of the images comprises:
comparing a current frame of image with a previous frame of image to obtain an overlapping region (A) between two adjacent frames of images and a newly added displacement region (B) of the current frame of image with respect to the previous frame of image; and
obtaining the displacement based on the number of photons CoB of the displacement region (B), the number of photons C per unit area of a reflection region of the surface corresponding to reflected light received by the image sensor, and a preset scaling factor K, wherein the scaling factor K is a proportional relationship between the area of the displacement region (B) and the displacement Di of the carrier part corresponding to the two adjacent frames of images.

11. The control method of claim 10, wherein the number of photons C per unit area of the reflection region of the surface corresponding to the reflected light received by the image sensor is related to at least one of the following parameters:
a reflection distance D0 between the camera assembly and the carrier part;
the luminous intensity L0 of the light source of the camera assembly;
the reflectivity R of the surface of the carrier part; and
the light transmittance T of the light-transmitting portion.
